# EUROPÄISCHE PATENTSCHRIFT

(11) **EP 0 794 412 B1**
(45) Veröffentlichungstag und Bekanntmachung des Hinweises auf die Patenterteilung: **02.02.2000**
(21) Anmeldenummer: 96103328.9
(22) Anmeldetag: 04.03.1996
(51) Int. Cl.: G01F 3/08

(54) **Vorrichtung zur Volumenmessung von Flüssigkeiten nach Art eines Ringkolbenzählers**
Rotary piston meter for measuring the volume flow of liquids
Appareil de mesure de quantités de liquide à piston rotatif

(43) Veröffentlichungstag der Anmeldung: 10.09.1997
(73) Patentinhaber: Bielenberg Gesellschaft für Messtechnik mbH, 50169 Kerpen (DE)
(72) Erfinder: Bielenberg, Reiner, D-50374 Erfstadt-Gymnich (DE)
(74) Vertreter: Müller-Gerbes, Margot, Dipl.-Ing.

(56) Entgegenhaltungen:
- DE-A- 2 622 034
- DE-U- 9 000 958
- DE-U- 9 414 581
- GB-A- 490 983
- GB-A- 661 809
- US-A- 3 874 235

## Beschreibung

Die Erfindung betrifft eine Vorrichtung zur Volumenmessung von Flüssigkeiten nach Art eines Ringkolbenzählers mit in einem mehrteiligen Gehäuse ausgebildeter zylindrischer Meßkammer mit einer Zylinderlängsachse (M) und einer in die Meßkammer radial ragenden Scheidewand und zwei die Meßkammer mit der Außenseite des Gehäuses verbindenden Verbindungskanälen für den Einlaß bzw. Auslaß der zu messenden Flüssigkeiten, die als durchgehende gerade Bohrungen senkrecht zur Zylinderachse (M) der Meßkammer durch die zylindrische Wandung des Gehäuses der Meßkammer verlaufend ausgebildet sind, wobei die meßkammerseitigen Eintrittsöffnungen der Verbindungskanäle durch die in die Meßkammer ragende Scheidewand voneinander abgeteilt und spiegelbildlich in bezug auf die Scheidewand angeordnet sind, sowie mit einem in der zylindrischen Meßkammer angeordneten exzentrisch zur Zylinderlängsachse (M) beweglichen, eine Taumelbewegung ausführenden Ringkolben mit H-förmigem Querschnitt mit einem oberen und einem unteren Ringraum, der eine Durchtrittsöffnung für den Eingriff der in die Meßkammer ragenden Scheidewand aufweist und die Meßkammer in einen zwischen der die Meßkammer begrenzenden Wandung des Gehäuses und der äußeren Mantelfläche des Ringkolbens sich erstreckenden äußeren Füllraum und zwei von den Ringräumen des Ringkolbens umschlossenen und von der Meßkammer abgegrenzte innere Füllräume unterteilt, sowie mit einem innerhalb der Meßkammer bewegbar gelagerten Magneten für die Meßwerterzeugung.

Ein Volumenzähler der gattungsgemäßen Art ist aus der DE 44 32 275 C1 und der DE-U- 94 14 581 bekannt. Bei dem gattungsgemäßen Ringkolbenzähler zur Volumenmessung sind die Verbindungskanäle als gerade Bohrungen senkrecht zur Zylinderachse der zylindrischen Meßkammer ausgebildet, so daß die anströmende zu messende Flüssigkeit senkrecht zur Zylinderachse der Meßkammer in die Meßkammer einströmt und entsprechend auf die sich in einer senkrechten Ebene zur einströmenden Flüssigkeitsebene erstreckende Mantelfläche des Ringkolbens trifft.

Im Gegensatz zu gattungsgemäßen Volumenzählern werden bei Volumenzählern gemäß DE-GM 90 00 958 oder gemäß GB 1423 569 dreidimensional gekrümmte in den stirnseitigen Boden einer zylindrischen Meßkammer führende Verbindungskanäle für den Ein- und Auslaß der Flüssigkeiten vorgesehen, wodurch andere Strömungsverhältnisse innerhalb der Meßkammer ausgebildet werden.

Bei dem gattungsgemäßen Volumenzähler ist bereits eine wirtschaftlichere Fertigung der Gehäuseteile und eine gegenüber den aufgeführten Stand der Technik erhöhte Meßgenauigkeit erzielbar. Um einen teilweisen Druckausgleich zwischen den Kolbeninnenräumen und der Meßkammer zu erreichen, ist es bekannt, Löcher und/oder kleinere Ausnehmungen in dem Mantel des Ringkolbens vorzunehmen. Befriedigend waren die Ergebnisse nicht, da insbesondere bei kleinen Anströmgeschwindigkeiten größere Meßfehler auftraten und bei Luft in der Flüssigkeit der Ringkolben zum Flattern neigte.

Der Erfindung liegt die Aufgabe zugrunde, den gattungsgemäßen Volumenzähler sowohl in bezug auf eine wirtschaftliche Fertigung als auch in bezug auf die erzielbare Meßgenauigkeit, d.h. Verringerung der Meßfehler, in bezug auf die Lebensdauer und in bezug auf den Meßbereich, d.h. Vergrößerung des Meßbereiches, zu verbessern.

Diese Aufgabe wird für eine Vorrichtung zur Volumenmessung nach Art eines Ringkolbenzählers der gattungsgemäßen Art dadurch gelöst, daß der Ringkolben an seinem Mantel in durch die Eintrittsöffnungen der Bohrungen in die Meßkammer definierter Anströmrichtung und Anströmfläche Ausnehmungen zum direkten Anströmen und Befüllen des oberen und unteren Ringraumes des Ringskolbens mit einer Öffnungsbreite jeder Ausnehmung größer als 0,25 D, vorzugsweise 5 bis 20 % größer als 0,25 D, wobei D der Außendurchmesser des Ringkolbens ist, aufweist, dergestalt, daß die außenseitige Mantelfläche des Ringkolbens und die innenseitigen Mantelflächen des Ringkolbens in bezug aufeinander gleichmäßig bzw. symmetrisch von der anströmenden Flüssigkeit beaufschlagbar sind und die Druckdifferenz zwischen dem von der anströmenden Flüssigkeit im in den beiden inneren Füllräumen im Bereich des oberen und unteren Ringraumes des Ringkolbens bewirkten Druck zu dem von der anströmenden Flüssigkeit in dem äußeren Füllraum der Meßkammer bewirkten Druck gegen Null geht.

Durch die erfindungsgemäß vorgesehene symmetrische bzw. annähernd symmetrische Anströmung des Ringkolbens dergestalt, daß ein Druckausgleich zwischen den auf die Außenseite des zylindrischen Mantels des Kolbens und die Innenseite des zylindrischen Mantels des Kolbens einwirkenden durch die einströmende Flüssigkeit hervorgerufenen Drucke ermöglicht wird, so daß die Druckdifferenz gegen Null geht bzw. annähernd zu Null wird, wird ein gleichmäßiger und ruhiger Lauf des Ringkolbens auch bei kleinen Anströmgeschwindigkeiten und auch beim Anlaufen des Volumenzählers erreicht. Des weiteren wurde gefunden, daß auch wenn Luft in der anströmenden Flüssigkeit enthalten ist, ein gleichmäßiger Lauf des Ringkolbens ermöglicht ist und ein Flattern desselben vermieden wird. Eine Folge dieses ruhigen gleichmäßigen Laufes des Ringkolbens ist auch eine lange Lebensdauer der Vorrichtung, da ein Ausschlagen der Meßkammer bzw. Meßkammerwandung durch den Ringkolben, wie er insbesondere bei unsymmetrischem Lauf auf Dauer erfolgt, vermieden wird, ebenso eine Zerstörung des Ringkolbens vermieden wird.

Ein wesentliches Merkmal der Erfindung ist darin zu sehen, daß der Ringkolben bei anströmender Flüssigkeit hydraulisch eingespannt ist, da die Strömungsrichtung der Flüssigkeiten in die Meßkammer senkrecht zur Zylinderachse der Meßkammer ist und beim Füllen, d.h. Anströmen der Meßkammer und des in der zylindrischen Meßkammer sich befindenden Ringkolbens die Anströmenergie infolge der entsprechenden Gestaltung des Ringkolbens gleichmäßig aufgeteilt wird.

In weiterer Ausbildung der Erfindung ist vorgesehen, daß die Ausnehmungen im Mantel des Ringkolbens so groß ausgebildet sind, daß bei anströmender Flüssigkeit ein gleicher Füllungsgrad im äußeren Füllraum in bezug auf den Füllungsgrad der Summe der beiden inneren Füllräume der Meßkammer erreichbar ist.

Ausgehend von einem Ringkolben mit einem H-förmigen Querschnitt, bei dem der Mantel nach beiden Seiten symmetrisch in bezug auf die Kolbenmittelwand überstehend ausgebildet ist, wird vorgeschlagen, die Ausnehmungen in dem Mantel des Ringkolbens symmetrisch zur Kolbenmittelwand und symmetrisch zur Durchtrittsöffnung des Ringkolbens und von dieser ausgehend auszubilden. Insbesondere ist vorgesehen, die Ausnehmungen für den oberen und unteren Ringraum in dem Mantel des Ringkolbens jeweils bis zur Kolbenmittelwand auszusparen, so daß insbesondere die Ausnehmungen in der Projektion eine rechteckige Form aufweisen.

Um eine symmetrische Befüllung und damit den gewünschten Druckausgleich innerhalb der Meßkammer bei durchströmender Flüssigkeit zu erzielen, sind die Eintrittsöffnungen der Verbindungskanäle an der zylindrischen inneren Meßkammerwand der Meßkammer symmetrisch in bezug auf den in der Meßkammer angeordneten Ringkolben angeordnet. Hierbei sind diese Eintrittsöffnungen der Verbindungskanäle, projiziert auf den anströmenden Mantel des Ringkolbens, so angeordnet, daß eine gleichmäßige insbesondere symmetrische Verteilung der Flüssigkeitsenergie auf den äußeren Mantelbereich des Ringkolbens zum Befüllen des äußeren Füllraumes und auf die beiden inneren Füllräume, d.h. die innere Mantelfläche des Ringkolbens, erfolgt.

Der Erfindung liegt die Erkenntnis zugrunde, daß eine im wesentlichen fehlerfreie Meßkurve für einen großen Meßbereich und unterschiedlichen Anströmgeschwindigkeiten nur bei Druckausgleich, d.h. druckdifferenzfrei schwimmendem oder hydraulisch eingespanntem Ringkolben in der Meßkammer möglich wird.

Hierfür wird in weiterer Ausbildung der Erfindung vorgesehen, daß die maximale projizierte Anströmfläche des Mantels des Ringkolbens in zwei gleiche bzw. zumindest annähernd gleiche Anströmflächen für die außenseitige Beaufschlagung des Ringkolbens und für die innenseitige Beaufschlagung des Ringkolbens aufgeteilt ist. Die Anströmfläche für die innenseitige Beaufschlagung des Ringkolbens ist durch die jeweils auf einer Seite der Scheidewand oberseitig und unterseitig anschließenden Ausnehmungen in dem Mantel des Ringkolbens gebildet und die für die Beaufschlagung des Ringkolbens außenseitige Anströmfläche ist von dem Mantel und der verbliebenen Mantelfläche der Kolbenmittelwand des Ringkolbens gebildet.

Um eine günstige Anströmung des Ringkolbens zu erhalten, ist des weiteren vorgesehen, daß der Durchmesser der Bohrungen der Verbindungskanäle zur Meßkammer und damit die Eintrittsöffnungen derselben kleiner als die Höhe des Mantels des Ringkolbens ist. Bevorzugt sind die Bohrungen der Verbindungskanäle achsparallel zueinander und zu einer Durchmesserachse der Meßkammer und spiegelsymmetrisch zur Scheidewand in dem Meßkammer ausgebildet, so daß auch die Eintrittsöffnungen der Verbindungskanäle symmetrisch in bezug auf die horizontale Achse des Ringkolbens, die durch die Kolbenmittelwandebene verläuft, in bezug auf den in der Meßkammer angeordneten Ringkolben angeordnet sind.

Vorteilhafte Ausgestaltungen des erfindungsgemäßen Volumenzählers sind den kennzeichnenden Merkmalen der Unteransprüche entnehmbar.

Für eine wirtschaftliche Bauweise des erfindungsgemäßen Volumenzählers wird vorgeschlagen, das Gehäuse dreiteilig mit einem die Verbindungskanäle aufweisenden zylindrischen Mittelteil mit zylindrischer Meßkammer und stirnseitigen Abdeckungen des Mittelteiles mit einem Bodenteil und einem Deckelteil zusammenzusetzen, wobei Dichtungen zwischen Mittelteil und Bodenteil bzw. Deckelteil eingelegt und die Gehäuseteile mittels Schrauben fest und dicht miteinander verbindbar sind. Auf diese Weise ist eine sehr genaue, jedoch einfache und wirtschaftliche Fertigung der Meßkammer des Volumenzählers mittels der drei Gehäuseteile ermöglicht, wobei das die zylindrische Meßkammer aufnehmende Mittelteil beispielsweise aus einem Rohrstück mit hoher Maßgenauigkeit fertigbar ist.

In bevorzugter Weiterbildung ist das Deckelteil und das Bodenteil mit je einem in die zylindrische Meßkammer des Mittelteiles einpaßbaren zentrischen Führungsabsatz ausgebildet. Das Deckelteil weist innenseitig koaxial zur Zylinderlängsachse einen Ringsteg mit einem zentrisch im Inneren angeordneten Führungszapfen auf, wobei zwischen dem Ringsteg und dem Führungszapfen ein umlaufender Ringraum für den Eingriff des Führungszapfens des Ringkolbens verbleibt. Das Bodenteil weist zentrisch und koaxial zur Zylinderlängsachse einen zylindrischen Führungssockel mit einer entsprechend der stirnseitigen Ringfläche des Ringsteges des Deckels entsprechenden ringförmigen Fläche als Auflagerfläche für den Ringkolben auf, so daß der Ringkolben zwischen der Ringfläche des Deckelteiles und der stirnseitigen Auflagerfläche des Führungssockels des Bodenteiles mit seiner Kolbenmittelwand geführt ist.

Der Magnet für die Meßwerterzeugung ist bevorzugt im Ringkolben befestigt, und zwar in der Weise, daß der Ringkolben einen in der Kolbenlängsachse sich in den oberen Ringraum erstreckenden Führungszapfen aufweist, der mit einer Sacklochbohrung, ausgehend von dem unteren Ringraum, versehen ist und in das Sackloch der Magnet eingesetzt und mittels eines Gewindestopfens abgedichtet befestigt ist. Der Magnet ist bevorzugt so eingesetzt, daß die Magnetachse mit der Ringkolbenachse zusammenfällt.

Ein magnetischer Sensor hingegen ist in dem dem Führungszapfen des Ringkolbens benachbarten Gehäuseteil, hier dem Deckel, untergebracht, wozu der Deckel im zentrischen Bereich eine von außen zugängliche Sacklochbohrung aufweist, in die der Sensor einsetzbar ist. Pro Umlauf des Führungszapfens des Ringkolbens mit dem eingesetzten Magneten um den Führungszapfen der Meßkammer wird ein Impuls als Meßwert erzeugt, der von dem magnetischen Sensor erfaßt und einer Zähl- und Auswerteeinrichtung zugeführt wird. Hierbei können sowohl einfache Impulszähler als auch elektronische Feldgeräte eingesetzt werden. die Anzahl der gemessenen Impulse entspricht einer definierten Menge und die Häufigkeit der Impulse einem bestimmten Durchfluß. Der erfindungsgemäße Volumenzähler ermöglicht eine Volumenmessung von Flüssigkeiten mit sehr hoher Genauigkeit mit einem Meßfehler unter 0,5 %, vorzugsweise unter 0,3 %.

Bei sehr kleinen Volumenzählern, d.h. kleiner Bauart, wird nur ein magnetischer Sensor dem Magneten zugeordnet im Meßkammerboden untergebracht. Bei größeren Volumenmessern ab Nennweiten 25 mm und größer werden bevorzugt zwei magnetische Sensoren oder auch vier magnetische Sensoren gleichmäßig verteilt um den Führungszapfen der Meßkammer im Boden der Meßkammer herum versenkt angeordnet, wodurch die Meßgenauigkeit erhöht wird.

Der erfindungsgemäße Volumenzähler hat eine sehr hohe Lebensdauer infolge seines extrem ruhigen Laufes.

Durch Verkleinerung des Meßfehlers ist es möglich, den Meßbereich eines Volumenzählers zu erhöhen, wobei der Meßbereich eines Volumenzählers von bis zu 1:20 möglich ist. Dadurch daß der Meßfehler auch für den Anlauf des Ringkolbenzählers, insbesondere auch bei sehr kleinen Anlaufgeschwindigkeiten des Ringkolbens nahezu Null ist, ist es möglich, mit dem erfindungsgemäßen Volumenzähler auch sehr geringe, d.h. kleine Flüssigkeitsströme, insbesondere auch Leckströme festzustellen und zu messen. Durch die erfindungsgemäße Ausbildung des Volumenzählers mit hydraulisch eingespanntem Ringkolben und Druckausgleich der Füllvolumen in der Meßkammer bewegt sich der Ringkolben auch noch bei sehr kleinen Flüssigkeitsströmen, wie Leckströmen, so daß er diese erfassen und zur Anzeige bringen kann. Damit wird die Sicherheit in Flüssigkeit führenden Leitungen gegen Leckage durch die Anzeigemöglichkeit mittels des erfindungsgemäßen Volumenzählers erhöht.

Die Erfindung ermöglich, die Anschlußflansche für die Zu- und Ableitung der Flüssigkeiten in einfacher Weise an die Austrittsöffnungen der Bohrungen an der Außenwand des Mittelteiles des Gehäuses, das die Meßkammer umfaßt, anzuschließen. Insbesondere wird vorgeschlagen, an dem Mittelteil in dem die Austrittsöffnungen der Bohrungen umgebenden Bereich an der Außenseite eine plane Anschlußfläche auszubilden. Es ist dann möglich, die Flansche in einer Baueinheit, beispielsweise über ein Anschlußstück gekoppelt, über die plane Anschlußfläche unter Einlage von Dichtungen anzuschrauben. Entsprechend ist es auch möglich, den Volumenzähler problemlos von den Anschlußleitungen abzukoppeln, beispielsweise für Wartungszwecke.

Die Erfindung wird in der Zeichnung in weiteren Details an einem Ausführungsbeispiel erläutert. Es zeigen
- Fig. 1: Ansicht auf die Anschlußseite eines Gehäuses eines erfindungsgemäßen Ringkolbenzählers
- Fig. 2: die Draufsicht AA nach Fig. 1 ohne Deckel auf das Gehäuse
- Fig. 3: Draufsicht BB nach Fig. 1 auf den Deckel innenseitig
- Fig. 4: Schnittansicht CC nach Fig. 1 um 90° gedreht
- Fig. 5: Ansicht auf die Anschlußseite des Ringkolbenzählers gemäß Fig. 1 mit eingesetztem Ringkolben
- Fig. 6: Schnittansicht DD nach Fig. 5 um 90° gedreht
- Fig. 7: Draufsicht auf einen Ringkolbenzähler auf die Deckelseite mit Anschlußstück und Anschlußflanschen
- Fig. 8: Draufsicht auf den Ringkolben für den Ringkolbenzähler gemäß Fig. 5 bis 7 in vergrößerter Darstellung
- Fig. 9: Schnittansicht EE des Ringkolbens nach Fig. 8
- Fig. 10: Ansicht F des Ringkolbens gemäß Fig. 8
- Fig. 11: Ansicht des Ringkolbens gemäß Fig. 10 mit eingezeichneten Anströmflächen
- Fig. 12: schematische Draufsicht auf die zylindrische Meßkammer mit eingesetztem Ringkolben und Anströmverhältnissen.

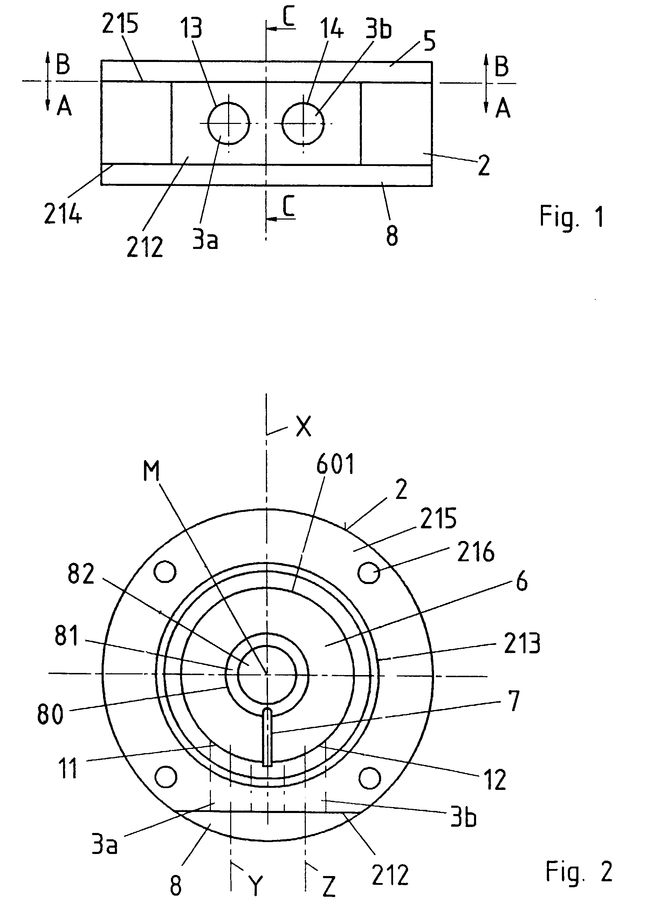

In den Fig. 1 bis 4 ist der erfindungsgemäße Aufbau eines Gehäuses für einen Volumenzähler zur Volumenmessung von Flüssigkeiten nach Art eines Ringkolbenzählers gemäß der Erfindung dargestellt. Das die zylindrische Meßkammer 6 umschließende Gehäuse des Ringkolbenzählers setzt sich aus dem zylindrischen Mittelteil 2 mit zylindrischem Innenraum, begrenzt durch die zylindrische Meßkammerwandung 601, sowie den die Stirnseiten 215 bzw. 214 des Mittelteils verschließenden Deckel 5 und Bodenteil 8 zusammen. In den Stirnseiten 214, 215 des Mittelteiles 2 sind nahe der zylindrischen Innenwandung 601 Ringnuten 213 bzw. 213a für die Einlage von Dichtungen ausgebildet. Im Bodenteil 8, Mittelteil 2 und Deckel 5 sind jeweils Durchgangsbohrungen 501 bzw. 216 bzw. im Bodenteil nicht näher bezeichnet ausgebildet, durch welche nicht näher dargestellte Schrauben geführt sind, um die Gehäuseteile 5, 2, 8 dicht und fest miteinander zu verbinden, und im Inneren des Gehäuses die Meßkammer 6 auszubilden. Die Zylinderlängsachse der Meßkammer 6 ist mit M bezeichnet. Die Verbindungskanäle zur Meßkammer 6 sind als durchgehende gerade Bohrungen 3a, 3b in einer Ebene senkrecht zur Zylinderlängsachse M durch das zylindrische Mittelteil 2 ausgeführt. Das zylindrische Mittelteil läßt sich mit hoher Genauigkeit für die Meßkammer aus einem Stahlrohr herstellen.

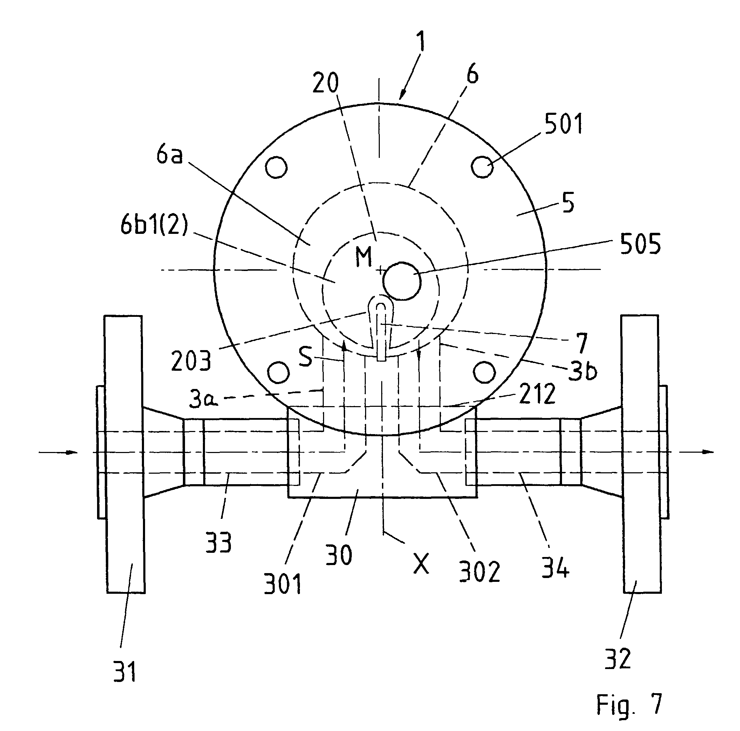

An der äußeren Anschlußseite der Bohrungen, an den Öffnungen 13, 14 der Verbindungskanäle 3a, 3b ist das zylindrische Mittelteil 2 abgeflacht mit der planen Anschlußfläche 212 ausgebildet. Dies ermöglicht einen einfacheren und sicheren Anschluß für die in die Meßkammer ein- und auszuführenden Flüssigkeiten mittels Anschlußstücken und Rohrverbindungen, siehe Fig. 7.

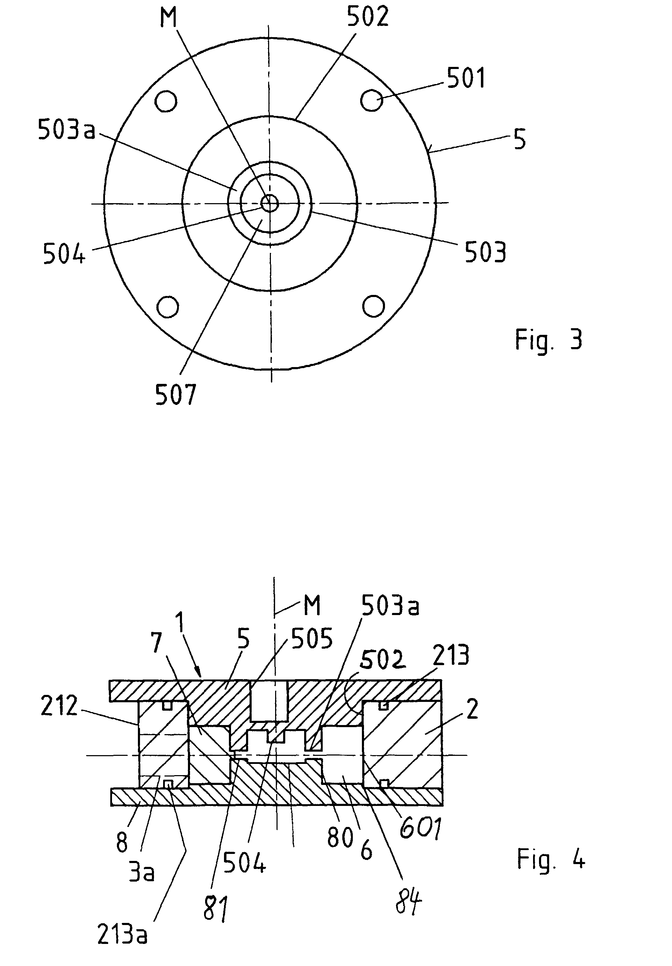

Fig. 2 zeigt die Draufsicht auf die von dem Mittelteil 2 umschlossene zylindrische Meßkammer 6. Die Stirnseite des Mittelteiles wird von dem Bodenteil 8 abgeschlossen, das einen zentrischen und koaxialen Führungsabsatz 84 aufweist, mit dem es in die Meßkammer 6 eingepaßt ist, siehe Fig. 4. Auf dem Führungsabsatz 84 ist zentrisch und koaxial zur Zylinderachse M der Meßkammer 6 der Führungsnockel 80 ausgebildet, der stirnseitig eine ringförmige Auflagerfläche 81 für einen Ringkolben aufweist und zentrisch die flache Ausnehmung 82 aufweist, siehe Fig. 2 und 4. Die Meßkammer ist an einer Stelle mittels sich senkrecht, d.h. über die Höhe der Meßkammer erstreckender und radial von der zylindrischen Innenwand 601 zur Mitte hin angeordneter Scheidewand 7 abgeteilt. Die Scheidewand 7 endet an dem am Bodenteil 8 zentrisch ausgebildeten in die Meßkammer ragenden Führungsockel 80. Die durch die Scheidewand 7 sich erstreckende Durchmesserachse der Meßkammer 6 wird mit X gezeichnet, sie erstreckt sich senkrecht zur Zylinderlängsachse M der Meßkammer. Die Scheidewand ist für Wartungszwecke auswechselbar eingesetzt. Beidseitig der Scheidewand 7 sind spiegelsymmetrisch zur Durchmesserachse X die für den Einlaß und den Auslaß der zu messenden Flüssigkeit in die Meßkammer 6 führenden Verbindungskanäle 3a, 3b als durchgehende zylindrische Bohrungen ausgebildet angeordnet. Diese Bohrungen 3a, 3b, die durch die zylindrische Wandung des Gehäuses 2 geführt sind, sind mit ihren Achsen Y bzw. Z bevorzugt zueinander achsparallel und ebenso achsparallel zu der Durchmesserachse X angeordnet. Die Eintrittsöffnungen 11 bzw. 12 der Bohrungen 3a bzw. 3b befinden sich auf der zylindrischen Innenwand 601 der Meßkammer. Durch die Bohrungen 3a, 3b ist eine Anströmung bzw. Einströmung von Flüssigkeit in die Meßkammer 6 in einer Ebene senkrecht zur Zylinderlängsachse M ermöglicht.

Der Deckel 5 weist, wie aus der Ansicht nach Fig. 3 ersichtlich, auf seiner Innenseite einen zylindrischen Führungszapfen 502 auf, mit dem er in die zylindrische Meßkammer 6 des Gehäusemittelteils 2 paßgenau einsetzbar ist. Auf dem Führungszapfen 502 sind stirnseitig in die Meßkammer ragend ein vorstehender Ringsteg 503 zentrisch ausgebildet, sowie ein zentrisch angeordneter kleiner Führungszapfen 504, wobei zwischen Ringsteg 503 und Führungszapfen 504 ein Ringraum 507 sich befindet, der zur Aufnahme eines Führungszapfens des in die Meßkammer einzusetzenden Ringkolbens dient. Auf der äußeren Oberseite des Deckels 5 ist, siehe Ring 4, eine leicht exzentrisch angeordnete Sacklochbohrung 505 vorgesehen zur Aufnahme eines magnetischen Sensors. Es können auch mehrere Sacklöcher bei großen Volumenzählern für mehrere Sensoren vorgesehen werden.

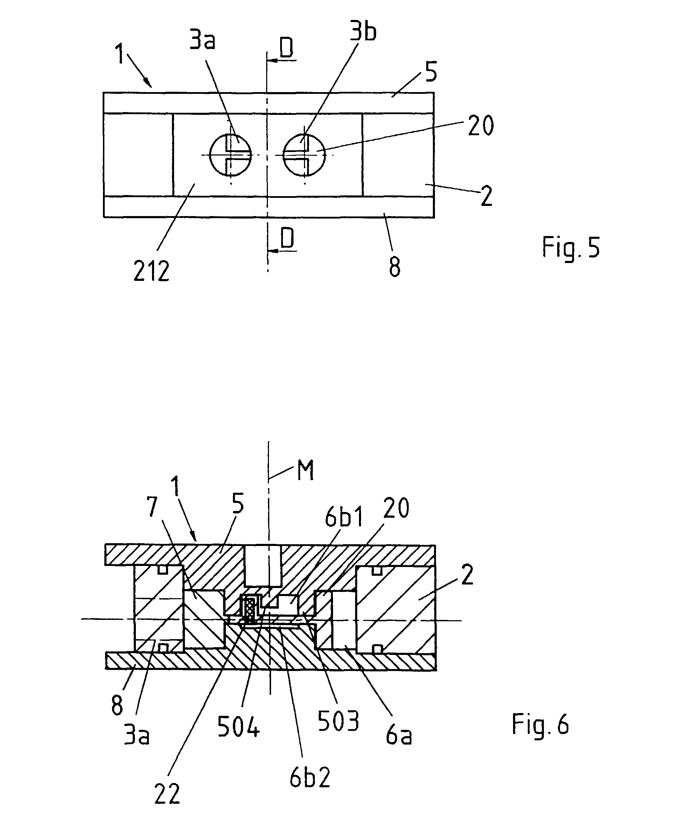

Wie aus der Schnittansicht gemäß Fig. 4 der die Meßkammer 6 umschließenden Gehäuseteile 2, 5, 8 ersichtlich, sind der Außendurchmesser des am Deckel 5 angeformten vorstehenden Ringsteges 503 sowie der Außendurchmesser des zylindrischen Führungssockels 80 des Bodenteiles 8 gleich ausgebildet, um Anlageflächen für den beweglichen Ringkolben zu bilden. Zwischen den Stirnflächen 503a des Ringsteges 503 des Deckels und der Stirnfläche 81 des Führungssockels verbleibt ein Zwischenraum für die Einlage des Ringkolbens mit seiner Kolbenmittelwand, wie aus Fig. 6 ersichtlich.

Die Größe der Meßkammer 6 wird nun einerseits durch die zylindrische Innenwandung 601 des Mittelteils 2 des Gehäuses und zum anderen durch die Ausgestaltung der in die Meßkammer ragenden Innenseiten von Deckel 5 und Bodenteil 8 bestimmt.

Die Gehäuseteile 2, 5 8 sowie die Scheidewand können beispielsweise aus einem korrosionsfesten Material, insbesondere einer geeigneten metallischen Legierung oder Gußlegierung hergestellt werden.

In der Fig. 7 ist in Draufsicht der als Ringkolbenzähler 1 ausgebildete Volumenzähler dargestellt und die zylindrische Meßkammer 6 mit exzentrisch eingesetztem Ringkolben 20 schematisch angedeutet. Der Ringkolben 20 weist hierbei eine schlitzartig ausgebildete Durchtrittsöffnung 203 auf, in welche die in die Meßkammer 6 eingesetzte und auswechselbare Scheidewand 7 eingreift. Der Ringkolben 20 mit kleinerem Außendurchmesser als der Innendurchmesser der Meßkammer ist exzentrisch zur Meßkammer-Zylinderlängsachse M eingesetzt und teilt die Meßkammer 6 in drei Füllräume, nämlich den äußeren Füllraum 6a zwischen Meßkammer-Innenwandung und außerer Mantelfläche des Ringkolbens und die beiden inneren Füllräume 6b.1 und 6b.2, die von den oberen und unteren Ringräumen des Ringkolbens 20 gegenüber der Meßkammerwandung von Deckel 5 und Bodenteil 8 gebildet sind.

Wie aus der Draufsicht nach Fig. 7 ersichtlich, ist die Durchtrittsöffnung 203 des Ringkolbens 20 tropfenförmig ausgebildet und gestattet dem exzentrisch in die Meßkammer eingesetzten Ringkolben 20 eine Taumelbewegung.

An die Anschlußfläche 212 ist an die Verbindungskanäle 3a, 3b ein Anschlußstück 30 mit Bohrungen 301, 302 für den Zu- und Abfluß der zu messenden Flüssigkeiten angeschlossen, beispielsweise angeschraubt unter Zwischenlage von Dichtungen. Das Anschlußstück 30 wiederum ist an den Ausgangsseiten der Bohrungen 301, 302 mit Flanschen 31 bzw. 32 mit den Zuflußkanälen 33, 34 zum Anschluß an weitere Rohrverbindungen ausgerüstet.

Wie aus der Zusammenschau der Fig. 1 bis 4 ersichtlich, sind die Bohrungen 3a, 3b für den Ein- und Auslaß der Flüssigkeiten in die Meßkammer 6 mit einem Durchmesser ausgebildet, der nur etwas geringer als die Höhe der zylindrischen Meßkammer 6 ist. Die Bohrungen 3a, 3b sind auch symmetrisch zur Zylinderachse M am Gehäusemittelteil 2 ausgebildet. Durch diese Anordnung und Ausbildung der Bohrungen 3a, 3b in dem zylindrischen Mittelteil 2 wird erreicht, daß der Eintritt und Austritt des Flüssigkeitsstromes in die Meßkammer, siehe Pfeile, mit einer Anströmrichtung S parallel zur Scheidewand 7 erfolgt, siehe Fig. 7. Auf diese Weise werden unnötige Strömungsumlenkungen vermieden und der Druckverlust beim Einströmen und Ausströmen von Flüssigkeiten in die Meßkammer 6 verringert.

Fig. 5 zeigt die Ansicht auf den Ringkolbenzähler 1 gemäß Fig. 1 mit eingesetztem Ringkolben 20. Der Ringkolben 20 ist hierbei, wie auch aus der Draufsicht nach Fig. 7 auf den Ringkolbenzähler ersichtlich, symmetrisch in der Meßkammer und in bezug auf die die Eintrittsöffnungen in die Meßkammer bestimmenden Verbindungskanäle 3a, 3b in der Meßkammer angeordnet, wobei diese Anordnung sich auf die Null-Stellung, wie in Fig. 7 dargestellt, bezieht.

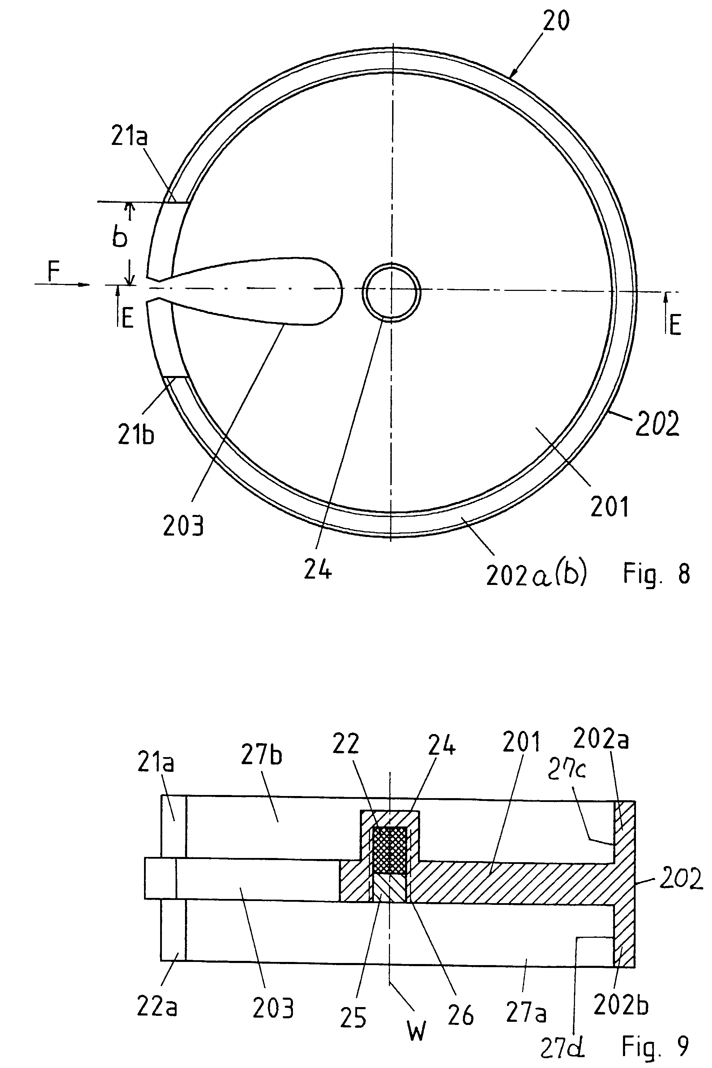

Der in die Meßkammer einzusetzende Ringkolben ist in einer Ausführungsform beispielhaft in den Fig. 8, 9 und 10 in vergrößerter Form dargestellt und wird anhand dessen nachfolgend näher erläutert. Der Ringkolben 20 ist beispielsweise aus einem geeigneten korrosionsbeständigen Kunststoff wie Polytetrafluorethylen oder EthylenChlortrifluorethylen-Copolymer oder Polyfluorethylenpropylen gefertigt und weist im Querschnitt betrachtet eine H-förmige Gestalt, siehe Fig. 9, auf.

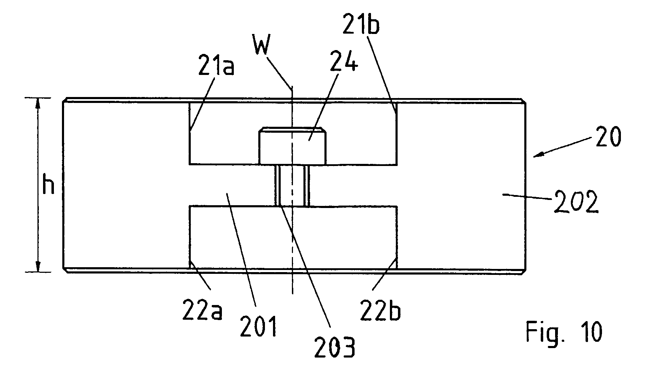

Der Ringkolben 20 umfaßt die zentrale kreisscheibenförmige Kolbenmittelwand 201 mit dem nach beiden Seiten gleichmäßig vorstehenden Mantel in Gestalt der Kragen 202a, 202b. Die Ringkolbenachse ist mit W bezeichnet. Ober- und unterseitig der Kolbenmittelwand 201 sind der obere Ringraum 27b und der untere Ringraum 27a gebildet, die von den inneren Mantelflächen 27c bzw. 27d begrenzt sind. Der Mantel des Kolbens bildet außenseitig die Mantelfläche 202. Der Ringkolben 20 weist des weiteren mittig und koaxial zur Ringkolbenachse W einen in den oberen Ringraum vorstehend ausgebildeten Führungszapfen 24 auf, der eine von dem unteren Ringraum 27a, d.h. der gegenüberliegenden Seite ausgehenden Sacklochbohrung 26 enthält. In die Sacklochbohrung 26 ist der Magnet 22 eingesetzt und mittels eines Gewindestopfens 25 fixiert. Der Gewindestopfen wird des weiteren mittels einer Dichtmasse abgedichtet, so daß eine Flüsssigkeit aus den Ringräumen zu dem Magneten dringen kann. Der Ringkolben 20 weist des weiteren in der Kolbenmittelwand 201 eine tropfenförmige bis länglich ovale radial von der Mantelseite sich bis nahe zur Mitte hin erstreckende Durchtrittsöffnung 203, siehe Fig. 8 und 9, auf. Die radiale Länge dieser Durchtrittsöffnung 203 ist so bemessen, daß beim Einsetzen des Ringkolbens 20 in die Meßkammer, siehe Fig. 7, die Scheidewand 7 in diese Durchtrittsöffnung 203 eingreift. In dem Bereich, wo die Durchtrittsöffnung 203 den Mantel 202, d.h. die Kragenteile 202a, 202b durchsetzt, ist der Mantel des Ringkolbens 20 mit von der Durchtrittsöffnung 203 ausgehenden bis auf die Kolbenmittelwand 201 reichenden Ausnehmungen 21a, 21b bzw. 22a, 22b ausgebildet. Die Ausnehmungen 21a, 21b stellen hierbei große Öffnungen zum Verbinden der oberen Ringraumes mit der Außenseite und die Ausnehmungen 22a, 22b Öffnungen zum Verbinden des unteren Ringraumes 27a mit der Außenseite dar. In der Ansicht auf die Mantelfläche 202 des Ringkolbens, siehe Fig. 10, ist ersichtlich, daß die Ausnehmungen im Mantel im wesentlichen eine rechteckige Gestalt in der projizierten Form aufweisen. Des weiteren kann die äußere Mantelfläche des Ringkolbens parallel zur Ringkolbenachse W fein genutet sein, damit Partikel, die möglicherweise in den zu messenden Flüssigkeiten enthalten sind, sich nicht festsetzen können.

Der Mantel 202 des Ringkolbens 20 weist eine Höhe h auf, die Öffnungsbreite einer Ausnehmung 21a bzw. 21b bzw. 22a, 22b ist mit b bezeichnet. Die vier Ausnehmungen 21a, 21b, 22a, 22b sind symmetrisch in bezug auf die Durchtrittsöffnung 203 des Ringkolbens 20 am Ringkolben angeordnet und ausgebildet.

Aus den Fig. 5, 6 und 7 ist ersichtlich, daß der Ringkolben 20 mit seiner Ringkolbenachse W exzentrisch, aber achsparallel zur Zylinderachse M in die Meßkammer 6 eingesetzt ist. Hierbei greift der Führungszapfen 24 des Ringkolbens 20, der mit dem Magneten 22 bestückt ist, in die Ringnut 507 des Deckels ein und wird hierin geführt, so daß er bei der Taumelbewegung des Ringkolbens 20 infolge der einströmenden Flüssigkeit eine kreisende Bewegung als Umlaufbahn um den Führungszapfen 504 des Deckels der Meßkammer ausführt. Jeder Umlauf wird dann mittels des in dem Deckel 5 in dem Sackloch 505 oder weiteren Sacklöchern angeordneten magnetischen Sensors registriert und an eine Auswerteeinheit als Impuls weitergegeben.

Wie aus Fig. 6 ersichtlich, ist der Ringkolben mit seiner Kolbenmittelwand 201 zwischen dem Ringsteg 503 des Deckels und dem Führungssockel 80 des Bodenteiles eingesetzt, wodurch die Meßkammer 6 in drei Füllräume unterteilt wird, nämlich den äußeren Füllraum 6a zwischen äußerer Mantelfläche 202 des Ringkolbens 20 und der zylindrischen Innenwandung des die Meßkammer begrenzenden Mittelteiles 2 des Gehäuses sowie den Füllraum 6b.1 zwischen dem Deckel und der Kolbenmittelwand im Bereich des oberen Ringraumes 27b, sowie dem weiteren unteren inneren Füllraum 6b.2 zwischen Bodenteil 8 und Kolbenmittelwand 201 einschließlich des unteren Ringraumes 27a.

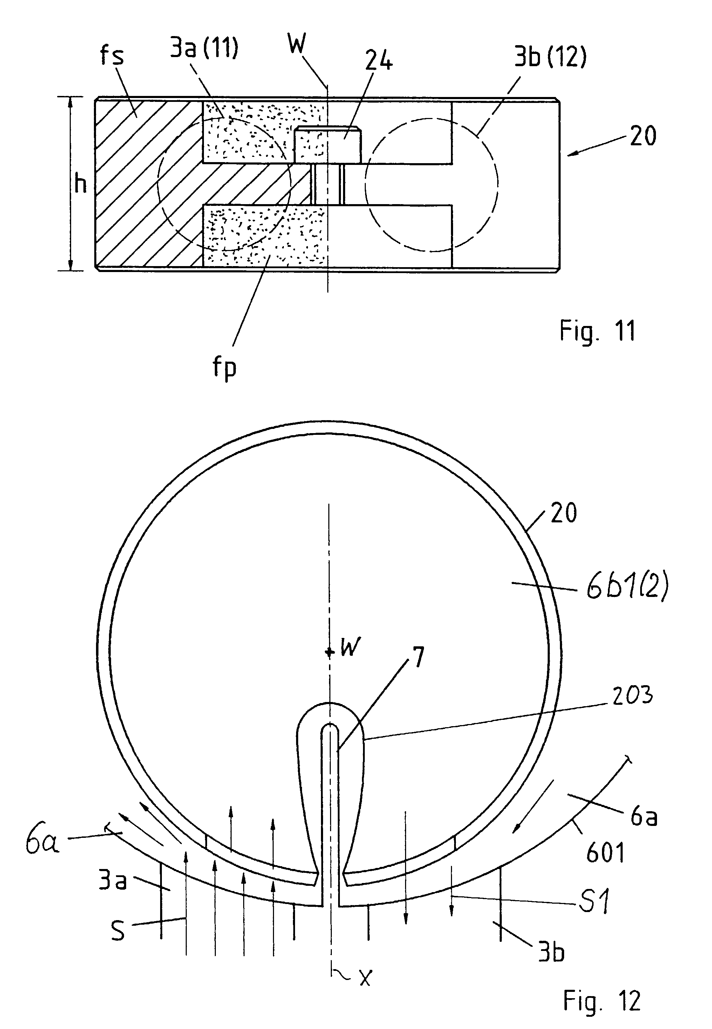

Die Arbeitsweise des Ringkolbenzählers gemäß der Erfindung ist im wesentlich wie folgt: Die Flüssigkeit, deren Volumen gemessen werden soll, tritt beispielsweise über den Anschlußstutzen 31, siehe Fig. 7, und die Bohrung 3a in die Meßkammer 6 ein. Hierbei strömt sie parallel in Pfeilrichtung S zur Scheidewand 7 in die Meßkammer und trifft hierbei auf den Mantel 202 des Ringkolbens in einer Ebene senkrecht zur Kolbenlängsachse W. Wie aus der schematisierten Darstellung der Anströmungsverhältnisse nach Fig. 12 hervorgeht, trifft die einströmende Flüssigkeitsmenge in Pfeilrichtung S hierbei nicht nur auf den äußeren Mantel 202 des Ringkolbens 20 im Bereich der Einströmung, sondern auch auf die Ausnehmungen 21a, 22a für den oberen und unteren Ringraum 27b, 27a (siehe auch Details der Fig. 8,9 und 10).

Der ankommende Flüssigkeitsstrom teilt sich somit, wie in Fig. 12 schematisch angedeutet, in einen Teil, der in den äußeren Füllraum 6a zwischen Meßkammerwandung 601 und äußerer Mantelfläche des Ringkolbens gebildet ist und zwei weitere Teilströme, die in den oberen und unteren Ringraum des Ringkolbens 20 im Bereich der Ausnehmungen 21a, 22a einströmen. Entsprechend der Anströmung, Menge und Durchsatz führt der Ringkolben auf Grund dieser Anströmung und der Anströmenergie eine taumelnde kreisende Bewegung durch, die einerseits begrenzt wird durch die Scheidewand 7 mit der Durchtrittsöffnung 23 des Ringkolbens und zum anderen geführt durch den Führungszapfen 24 des Ringkolbens innerhalb des Ringsteges 503 des Deckels der Meßkammer. Hierbei gelangt die Flüssigkeit durch die verschiedenen Füllräume der Meßkammer 6a, 6b.1, 6b.2 wieder zur Bohrung 3b, d.h. zur anderen Eintrittsöffnung 12 des zweiten Verbindungskanales, durch die sie in Pfeilrichtung S1 abfließen kann, wiederum dann über den Anschlußstutzen 32, siehe Fig. 7.

Der Erfindung liegt die Erkenntnis zugrunde, daß eine im wesentlichen fehlerfreie Meßkurve für einen großen zu messenden Mengenbereich und unterschiedliche Anströmgeschwindigkeiten nur bei Druckausgleich, d.h. druckdifferenzfrei schwimmendem oder hydraulisch eingespanntem Ringkolben 20 in der Meßkammer 6 möglich wird.

Hierfür wird in weiterer Ausbildung der Erfindung vorgesehen, siehe Fig. 11, 12, daß die maximale projizierte Anströmfläche des Mantels 202 des Ringkolbens 20 in zwei gleiche bzw. zumindestens annähernd gleiche Anströmflächen fs für die außenseitige Beaufschlagung des Ringkolbens und fp für die innenseitige Beaufschlagung des Ringkolbens aufgeteilt ist. Die Anströmfläche für die innenseitige Beaufschlagung des Ringkolbens ist durch die jeweils auf einer Seite der Scheidewand 7 oberseitig und unterseitig anschließenden Ausnehmungen einer 21a, 22a in dem Mantel 202 des Ringkolbens 20 gebildet und die für die Beaufschlagung des Ringkolbens außenseitige Anströmfläche ist von dem Mantel und der verbliebenen Mantelfläche der Kolbenmittelwand des 201 Ringkolbens, in der Projektion betrachtet, gebildet.

Die projizierte Anströmfläche wird jeweils von einem viertel Kreis des Mantels des Ringkolbens gebildet. In der Betrachtung gemäß Fig. 11 und 12 ist jeweils die Nullstellung, wie dargestellt, zugrunde gelegt. Wie aus der Fig. 12 ersichtlich in Verbindung mit Fig. 11, ist die Eintrittsöffnung 11, wenn der zweite Verbindungskanal mit Eintrittsöffnung dann den Ausgang bildet, symmetrisch in bezug auf die Projektion des Ringkolbens, d.h. in bezug auf seine vertikale Achse W als auch in bezug auf seine horizontale durch die Kolbenmittelwand verlaufende Symmetrieachse und in bezug auf die Durchtrittsöffnung 203 des Ringkolbens geführte Scheidewand 7 symmetrisch in der Meßkammerwandung angeordnet, siehe Fig. 11. Hierbei ist die Höhe h des Mantels des Ringkolbens 20 etwas größer als der Durchmesser der Verbindungskanäle 3a, 3b. Um möglichst gleiche Beaufschlagung sowohl des äußeren Füllraumes 6a als auch der Summe der beiden inneren Füllräume 6b.1, 6b.2 zu ermöglichen, weisen die Ausnehmungen 21a, 21b, 22a, 22b bevorzugt eine Breite b, siehe Fig. 8, auf, die etwas größer als 0,25 D ist, wobei D der Außendurchmesser des Ringkolbens 20 ist. Die Eintrittsöffnungen 11, 12 der Verbindungskanäle für die zu messende Flüssigkeit ist dann, wie aus der Fig. 11 ersichtlich, dem Ringkolben 12 und seinen Ausnehmungen im Bereich der Durchtrittsöffnung so zugeordnet, daß eine möglichst symmetrische Verteilung der Anströmenergie auf den äußeren Füllraum 6a bzw. die beiden inneren Füllräume 6b.1, 6b.2 erfolgen kann. Beim Füllen wird dann, wie aus Fig. 12 ersichtlich, die Anströmenergie gleichmäßig aufgeteilt, so daß ein gleicher Flüllungsgrad zwischen außen und innen für den Ringkolben erreicht wird, und die Druckdifferenz zwischen dem äußeren Füllraum 6a sowie den inneren Füllräumen 6b.1, 6b.2 gegen Null geht oder Null wird, so daß der Ringkolben druckdifferenzfrei schwimmt, und hydraulisch eingespannt ist, und zwar horizontal hydraulisch eingespannt. Auf diese Weise ist es möglich, daß der Ringkolben auch bei kleinen Anströmgeschwindigkeiten und auch bei wechselnden Durchflüssen und sogar bei Flüssigkeiten, die Luft enthalten, sehr gleichmäßig und ruhig läuft und nicht flattert oder schlägt. Es ist also wesentlich für die Realisierung der Erfindung, daß die Anordnugn der Eintrittsöffnungen 11, 12 der Verbindungskanäle für den Einlaß und Auslaß der Flüssigkeiten in die Meßkammer sowie die Zuordnung des Ringkolbens sowie seine Ausnehmung zur Beaufschlagung des Ringkolbens innenseitig und außenseitig so ausgewählt sind, daß eine möglichst gleichmäßige und symmetrische Anströmung des Ringkolbens außen und innen ermöglicht ist, wodurch ein Druckausgleich zwischen den inneren und der äußeren Meßkammer, d.h. den inneren und äußeren Füllräumen erfolgen kann. Insbesondere ist auch die Ausbildung der Ausnehmungen in dem Mantel des Ringkolbens zum einfachen Einströmen eines Teiles der Flüssigkeit in die inneren Ringräume des Ringkolbens so ausgebildet, daß ein paralleles Einströmen, wie aus Fig. 12 ersichtlich, ermöglicht ist. Auch bei Durchführung der Taumelbewegung des Ringkolbens 20 bei durchströmender Flüssigkeit werden die Verhältnisse der Anströmflächen fs und fp zwar geringfügig geändert, verbleiben jedoch insgesamt in der Aufteilung nahe der gewünschten und angestrebten Symmetrie, so daß ein optimaler Lauf des Ringkolbens erzielbar ist.

## Patentansprüche

1. Vorrichtung zur Volumenmessung von Flüssigkeiten nach Art eines Ringkolbenzählers mit in einem mehrteiligen Gehäuse ausgebildeter zylindrischer Meßkammer (6) mit einer Zylinderlängsachse (M) und einer in die Meßkammer radial ragenden Scheidewand (7) und zwei die Meßkammer mit der Außenseite des Gehäuses verbindenden Verbindungskanälen für den Einlaß (3a) bzw. Auslaß (3b) der zu messenden Flüssigkeiten, die als durchgehende gerade Bohrungen senkrecht zur Zylinderachse (M) der Meßkammer durch die zylindrische Wandung des Gehäuses der Meßkammer verlaufend ausgebildet sind, wobei die meßkammerseitigen Eintrittsöffnungen (11,12) der Verbindungskanäle durch die in die Meßkammer ragende Scheidewand (7) voneinander abgeteilt und spiegelbildlich in bezug auf die Scheidewand angeordnet sind, sowie mit einem in der zylindrischen Meßkammer angeordneten exzentrisch zur Zylinderlängsachse (M) beweglichen, eine Taumelbewegung ausführenden Ringkolben (20) mit H-förmigem Querschnitt mit einem oberen und einem unteren Ringraum (27b,27a), der eine Durchtrittsöffnung (203) für den Eingriff der in die Meßkammer ragenden Scheidewand (7) aufweist, und die Meßkammer in einen zwischen der die Meßkammer begrenzenden Wandung des Gehäuses und der äußeren Mantelfläche des Ringkolbens (202) sich erstreckenden äußeren Füllraum (6a) und zwei von den Ringräumen des Ringkolbens umschlossenen und von der Meßkammer abgegrenzte innere Füllräume (6b.1,6b.2) unterteilt, sowie mit einem innerhalb der Meßkammer bewegbar gelagerten Magneten (22) für die Meßwerterzeugung, **dadurch gekennzeichnet**, daß der Ringkolben (20) an seinem Mantel (202) in durch die Eintrittsöffnungen (11, 12) der Bohrungen (3a, 3b) in die Meßkammer definierter Anströmrichtung (S) und Anströmfläche (fs, fp) Ausnehmungen (21a, 22a; 21b, 22b) zum direkten Anströmen und Befüllen des oberen und unteren Ringraumes (27b, 27a) des Ringskolbens (20) mit einer Öffnungsbreite (b) jeder Ausnehmung (21a,21b,22a,22b) größer als 0,25 D, vorzugsweise 5 bis 20 % größer als 0,25 D, wobei D der Außendurchmesser des Ringkolbens (20) ist, aufweist, dergestalt, daß die außenseitige Mantelfläche des Ringkolbens und die innenseitigen Mantelflächen (27c,d) des Ringkolbens in bezug aufeinander gleichmäßig bzw. symmetrisch von der anströmenden Flüssigkeit beaufschlagbar sind und die Druckdifferenz zwischen dem von der anströmenden Flüssigkeit im in den beiden inneren Füllräumen (6b.1, 6b.2) im Bereich des oberen und unteren Ringraumes des Ringkolbens bewirkten Druck zu dem von der anströmenden Flüssigkeit in dem äußeren Füllraum (6a) der Meßkammer bewirkten Druck gegen Null geht.

2. Vorrichtung nach Anspruch 1,
**dadurch gekennzeichnet**, daß der Ringkolben (20) bei anströmender Flüssigkeit in der Meßkammer hydraulisch eingespannt ist.

3. Vorrichtung nach Anspruch 1 oder 2,
**dadurch gekennzeichnet,** daß die den Eintrittsöffnungen (11, 12) der Verbindungskanäle (3a, 3b) zugeordneten Ausnehmungen (21a, 22a bzw. 21b, 22b) so groß ausgebildet sind, daß bei anströmender Flüssigkeit in einem der Verbindungskanäle ein gleicher Füllungsgrad von äußerem Füllraum (6a) der Meßkammer (6) zu der Summe der beiden inneren Füllräume (6b.1, 6b.2) im Bereich des Ringkolbens erreichbar ist.

4. Vorrichtung nach einem der Ansprüche 1 bis 3,
**dadurch gekennzeichnet,** daß der Durchmesser der Bohrungen (3a, 3b) der Verbindungskanäle zur Meßkammer (6) kleiner als die Höhe (h) des Mantels (202) des Ringkolbens (20) ist.

5. Vorrichtung nach einem der Ansprüche 1 bis 4,
**dadurch gekennzeichnet**, daß die Ausnehmungen (21a,b; 22a,b) symmetrisch zur Kolbenmittelwand (201) und symmetrisch zur Durchtrittsöffnung (203) des Ringkolbens (20) und von dieser ausgehend ausgebildet sind.

6. Vorrichtung nach einem der Ansprüche 1 bis 5,
**dadurch gekennzeichnet,** daß die Ausnehmungen (21a,b, 22a,b) für den oberen und unteren Ringraum in dem Mantel (202) des Ringkolbens (20) jeweils bis zur Kolbenmittelwand (201) ausgespart sind.

7. Vorrichtung nach einem der Ansprüche 1 bis 6,
**dadurch gekennzeichnet**, daß die Ausnehmungen (21a,b; 22a,b) des Mantel des Ringkolbens (20) in der Projektion betrachtet eine rechteckige Form aufweisen.

8. Vorrichtung nach einem der Ansprüche 1 bis 7,
**dadurch gekennzeichnet,** daß die Eintrittsöffnungen (11, 12) der Verbindungskanäle (3a,b) an der zylindrischen inneren Meßkammerwand (601) der Meßkammer (6) symmetrisch in bezug auf den in der Meßkammer angeordneten Ringkolben (20) angeordnet sind.

9. Vorrichtung nach einem der Ansprüche 1 bis 8,
**dadurch gekennzeichnet**, daß die maximale projizierte Anströmfläche des Mantels (202) des Ringkolbens (20), die' einer Eintrittsöffnung eines Verbindungskanals zugeordnet ist, in zwei gleiche bzw. zumindest annähernd gleiche Anströmflächen für die außenseitige Beaufschlagung (fs) des Ringkolbens und für die innenseitige Beaufschlagung (fp) des Ringkolbens aufgeteilt ist, wobei die Anströmfläche (fp) für die innenseitige Beaufschlagung des Ringkolbens durch die jeweils auf einer Seite der Scheidewand oberseitig und unterseitig anschließenden Ausnehmungen (21a, 22a bzw. 21b, 22b) in dem Mantel des Ringkolbens gebildet wird und die für die außenseitige Beaufschlagung des Ringkolbens außenseitige Anströmfläche (fs) von dem Mantel und der von der Kolbenmittelwand im Bereich der Ausnehmungen verbliebenen Restmantelfläche des Ringkolbens gebildet wird.

10. Vorrichtung nach einem der Ansprüche 1 bis 9,
**dadurch gekennzeichnet**, daß der Ringkolben einen in der Kolbenlängsachse (W) sich in den oberen Ringraum erstreckenden Führungszapfen (24) aufweist, der mit einer Sacklochbohrung (26) ausgehend von dem unteren Ringraum (27a) versehen ist, und in das Sackloch (26) der Magnet (22) für die Meßwerterzeugung eingesetzt und mittels eines Gewindestopfens (25) abgedichtet befestigt ist.

11. Vorrichtung nach einem der Ansprüche 1 bis 10,
**dadurch gekennzeichnet**, daß das Gehäuse dreiteilig aus einem die Verbindungskanäle aufweisenden zylindrischen Mittelteil (2) mit zylindrischer Meßkammer (6) und einem Bodenteil (8) und einem Deckel (5) zusammengesetzt ist und Dichtungen zwischen Mittelteil und Bodenteil bzw. Deckel eingelegt und die Gehäuseteile mittels Schrauben fest und dicht miteinander verbunden sind.

12. Vorrichtung nach Anspruch 11,
**dadurch gekennzeichnet,** daß das Deckelteil (5) und das Bodenteil (8) je einen in die zylindrische Meßkammer (6) des Mittelteiles (2) paßgenau einführbahren zentrischen Führungsabsatz (502, 84)aufweisen und der Deckel innenseitig koaxial zur Zylinderlängsachse (M) einen Ringsteg (503) mit einem zentrisch im Inneren angeordneten Führungszapfen (504) aufweist, wobei zwischen dem Ringsteg (503) und dem Führungszapfen (504) ein umlaufender Ringraum (507)für den Eingriff eineses Führungszapfens (24) des Ringkolbens (20) verbleibt und das Bodenteil (8) zentrisch und koaxial zur Zylinderlängsachse (M) einen zylindrischen Führungssockel (80) mit einem dem Außendurchmesser des Ringsteges (503) des Deckels (5) entsprechenden Außendurchmesser und mit einer entsprechend der stirnseitigen Ringfläche des Ringsteges (503) des Deckels entsprechenden ringförmigen stirnseitigen Fläche (81) als Auflagerfläche für den Ringkolben aufweist, so daß der Ringkolben zwischer dem Ringfläche (503a) des Deckels (5) und der stirnseitigen Auflagerfläche (81) des Führungssockels (80) des Bodenteils (8) mit seiner Kolbenmittelwand geführt ist.

13. Vorrichtung nach einem der Ansprüche 1 bis 12,
**dadurch gekennzeichnet,** daß im Deckel (5) im zentrischen Bereich mindestens eine Sacklochbohrung (505) von außen zugänglich ausgebildet ist, in die jeweils ein magnetischer Sensor einsetzbar ist, mit dessen Hilfe der in dem Ringkolben (20) angeordnete Magnet (22) pro Umlauf des Führungszapfens (24) des Ringkolbens (20) um den im Deckel (5) ausgebildeten Führungszapfen (504) der Meßkammer einen Impuls als Meßwert erzeugt, der einer Zähl- und Auswerteeinheit zuführbar ist.

14. Vorrichtung nach Anspruch 11,
**dadurch gekennzeichnet**, daß auf der Außenseite des zylindrischen Mittelteiles (2) des Gehäuses in dem die Austrittsöffnungen (13,14) der Bohrungen (3a,3b) umgebenden Bereich über die ganze Höhe des Mittelteiles eine plane Anschlußfläche (212) ausgebildet ist.

## Claims

1. A device for measuring liquid volume of the cylindrical piston meter type, with the cylindrical measuring chamber (6) provided in a multipartite housing, with a lengthwise cylinder axis (M) and a dividing wall (7) projecting radially into the measuring chamber, and two connecting channels connecting the measuring chamber with the outside of the housing for the inlet (3a) and outlet ( 3b) of the liquids to be measured, said channels being designed as through straight bores perpendicular to cylinder axis (M) of the measuring chamber running through the cylindrical wall of the housing of the measuring chamber, with the inlet openings (11, 12) on the measuring chamber side of the connecting channels being divided from one another by the dividing wall (7) projecting into the measuring chamber and being arranged mirrorwise relative to the dividing wall, as well as with a cylindrical piston (20) located in the cylindrical measuring chamber and eccentrically movable with respect to the lengthwise cylinder axis (M) performing a wobbling movement, said cylinder having an H-shaped cross section with an upper and a lower annular chamber, (27b, 27a) with a through opening (203) for engagement of the dividing wall (7) projecting into the measuring chamber and dividing the measuring chamber into an outer filling chamber (6a) extending between the wall of the housing that delimits the measuring chamber and the outer jacket surface of the cylindrical piston (202), and two inner filling chambers (6b.1, 6b.2) surrounded by the annular chambers of the cylindrical piston and delimited from the measuring chamber, as well as with a magnet (22) movably mounted inside the measuring chamber for generating the measured value, **characterized in** that cylindrical piston (20) on its jacket (202) has in its inflow direction, defined by inlet openings (11, 12) of bores (3a, 3b), into the measuring chamber and inflow surfaces (fs, fp) recesses (21a, 22a, 21b, 22b) for direct inflow and filling of upper and lower annular chambers (27b, 27a) of cylindrical piston (20) with an opening width (b) of each recess (21a, 21b, 22a, 22b) larger than 0.25 D, preferably 5 to 20 % greater than 0.25 D, where D is the outside diameter of cylindrical piston (20), so that the external jacket surface of the cylindrical piston and inside jacket surfaces (27c, d) of the cylindrical piston relative to one another ca be impacted uniformly or symmetrically by the inflowing fluid, and the pressure differential between the pressure produced in the two inner filling chambers (6b.1 and 6b.2) in the vicinity of the upper and lower annular chambers of the cylindrical piston with respect to the pressure produced by the inflowing fluid in the outer filling chamber (6a) of the measuring chamber tends toward zero.

2. A device according to Claim 1 **characterized in** that cylindrical piston (20), with the inflowing liquid, is tensioned hydraulically in the measuring chamber.

3. A device according to Claim 1 or 2, **characterized in** that recesses (21a, 22a, and 21b, 22b, respectively) associated with inlet openings (11, 12) of connecting channels (3a, 3b) are made so large that with the inflowing liquid in one of the connecting channels, a uniform degree of filling of outer filling chamber (6a) of measuring chamber (6) relative to the sum of the two internal filling chambers (6b.1, 6b.2) can be achieved in the area of the cylindrical piston.

4. A device according to one of Claims 1 to 3, **characterized in** that the diameter of bores (3a, 3b) of the connecting channels to measuring chamber (6) is smaller than height (h) of jacket (202) of cylindrical piston (20).

5. A device according to one of Claims 1 to 4, **characterized in** that recesses (21a, b; 22a, b) are made symmetrical to piston middle wall (201) and symmetrical to through opening (203) of cylindrical piston (20) and departing therefrom.

6. A device according to one of Claims 1 to 5, **characterized in** that recesses (21a, b; 22a, b) for the upper and lower annular chambers are cut in jacket (202) of cylindrical piston (20), in each case down to cylinder middle wall (201).

7. A device according to one of Claims 1 to 6, **characterized in** that recesses (21a, b; 22a, b) of the jacket of cylindrical piston (20), viewed in projection, have a rectangular shape.

8. A device according to one of Claims 1 to 7, **characterized in** that inlet openings (11, 12) of connecting channels (3a, b) at cylindrical inside measuring chamber wall (601) of measuring chamber (6) are arranged symmetrically with respect to cylindrical piston (20) provided in the measuring chamber.

9. A device according to one of Claims 1 to 8, **characterized in** that the maximum projected inflow area of jacket (202) of cylindrical piston (20), associated with an inlet opening of a connecting channel, is divided into two equal or at least approximately equal inflow areas for external impact (fs) on the cylindrical piston and for internal impact (fp) on the cylindrical piston, with inflow area (fp) for internal impact on the cylindrical piston being formed by recesses (21a, 22a, and 21b, 22b) in the jacket of the cylindrical piston abutting one side of the separating wall at the top and bottom respectively, and external inflow area (fs) for external impact on the cylindrical piston being formed by jacket and the residual jacket surface of the cylindrical piston that remains of the piston middle wall in the area of the recesses.

10. A device according to one of Claims 1 to 9, **characterized in** that the cylindrical piston has a guide pin (24) extending in the lengthwise axis (W) of the piston in the upper annular chamber, said pin being provided with a bore (26) in the form of a blind hole starting from lower annular chamber (27a), and magnet (22) for generating the measured value being inserted into blind hole (26) and fastened therein with a seal by means of a threaded plug (25).

11. A device according to one of Claims 1 to 10, **characterized in** that the housing is assembled in three parts composed of a cylindrical middle part (2) comprising the connecting channels with a cylindrical measuring chamber (6) and a bottom part (8) and a cover (5), and gaskets are inserted between the middle part and the bottom part and the cover, and the housing parts are connected permanently and tightly with one another by screws.

12. A device according to Claim 11, **characterized in** that cover part (5) and bottom part (8) each have a guide projection (502, 84) that ca be inserted with an exact fit into cylindrical measuring chamber (6) of middle part (2), and the cover has an annular rib (503) located internally coaxially with respect to lengthwise cylinder axis (M), with a guide pin (504) located centrally in the interior, with a circumferential annular chamber (507) for the engagement of a guide pin (24) of the cylindrical piston (20) remaining between annular rib (503) and guide pin (504), and bottom part (8) has a cylindrical guide base (80) located centrally and coaxially with respect to lengthwise cylinder axis (M), said base having an outside diameter that matches the outside diameter of annular rib (503) of cover (5) and having a matching annular end surface (81) as a supporting surface for the cylindrical piston corresponding to the endwise annular surface of annular rib (503) of the cover, so that the circular piston is guided between annular surface (503a) of cover (5) and end supporting surface (81) of guide base (80) of bottom part (8) with its piston middle wall.

13. A device according to one of Claims 1 to 12, **characterized in** that at least one bore (505) in the form of a blind hole is made in cover (5) in the central area, said hole being accessible from the exterior, into which hole a magnetic sensor is insertable, with whose aid magnet (22) located in cylindrical piston (20), with each revolution of guide pin (24) of cylindrical piston (20) around guide pin (504) formed in cover (5) in the measuring chamber, generating an impulse as a measured value that can be fed to a counting and evaluation unit.

14. A device according to Claim 11, **characterized in** that a flat connecting surface (212) is formed on the outside of cylindrical middle part (2) of the housing in the area surrounding outlet openings (13, 14) of bores (3a, 3b) over the entire height of the middle part.

## Revendications

1. Dispositif pour la mesure du volume de liquides du type compteur à piston annulaire comportant une chambre cylindrique de mesure (6) configurée comme boîtier en plusieurs parties qui présente un axe longitudinal de cylindre (M), une cloison (7) débordant radialement dans la chambre de mesure et deux canaux de liaison reliant la chambre de mesure aux côtés extérieurs du boîtier, à savoir pour l'entrée (3a) et pour la sortie (3b) du liquide à mesurer, lesquels canaux sont configurés comme alésages droits traversant la paroi cylindrique du boîtier de la chambré de mesure perpendiculairement à l'axe (M) du cylindre de la chambre de mesure, les ouvertures (11, 12) d'entrée des canaux de liaison dans la chambre de mesure étant séparées l'une de l'autre par la cloison (7) débordant dans la chambre de mesure et étant disposées symétriquement par rapport à la cloison, et comportant un piston annulaire mobile (20) disposé dans la chambre de mesure cylindrique excentriquement par rapport à l'axe longitudinal (M) du cylindre, lequel piston exécute un déplacement de nutation, présente une section transversale en forme de H avec un espace annulaire supérieur et un espace annulaire inférieur (27b, 27a), présente une ouverture de passage (203) pour l'engagement de la cloison (7) débordant dans la chambre de mesure, et divise la chambre de mesure en une chambre de remplissage externe (6a) qui s'étend entre la paroi du boîtier délimitant la chambre de mesure et la surface d'enveloppe externe du piston annulaire (202) et en deux chambres de remplissage (6b.1, 6b.2) entourées par les espaces annulaires du piston annulaire et délimitées par la chambre de mesure, et comportant un aimant (22) monté de manière à pouvoir se déplacer à l'intérieur de la chambre de mesure et servant à générer les valeurs de mesure, caractérisé en ce que sur son enveloppe (202), le piston annulaire (20) présente, dans la direction (S) d'entrée de l'écoulement définie par les ouvertures d'entrée (11, 12), des alésages (3a, 3b) ménagés dans la chambre de mesure et dans la surface d'amenée d'écoulement (fs, fp), des évidements (21a, 22a; 21b, 22b) permettant l'arrivée directe de l'écoulement et le remplissage de l'espace annulaire supérieur et de l'espace annulaire inférieur (27b, 27a) du piston annulaire (20), une largeur d'ouverture (b) de chaque évidement (21 a, 21b, 22a, 22b) étant supérieure à 0,25 D, de préférence de 5 à 20% supérieure à 0,25 D, D étant le diamètre extérieur du piston annulaire (20), de telle sorte que le liquide entrant peut solliciter la surface d'enveloppe extérieure du piston annulaire et la surface d'enveloppe intérieure (27c, d) du piston annulaire de manière régulière ou symétrique l'une par rapport à l'autre, et la différence entre la pression exercée par le liquide entrant dans les deux chambres de remplissage intérieures (6b.1, 6b.2) dans la région de l'espace annulaire supérieur et de l'espace annulaire inférieur du piston annulaire et la pression exercée par le liquide entrant dans l'espace de remplissage extérieur (6a) de la chambre de mesure tend vers zéro.

2. Dispositif selon la revendication 1, caractérisé en ce que le piston annulaire (20) est sollicité hydrauliquement lorsque le liquide pénètre dans la chambre de mesure.

3. Dispositif selon la revendication 1 ou 2, caractérisé en ce que les évidements (21a, 22a ou 21b, 22b) associés aux ouvertures d'entrée (11, 12) des canaux de liaison (3a, 3b) sont suffisamment grands pour que, lorsque le liquide pénètre dans l'un des canaux de liaison, l'on puisse obtenir dans la région du piston annulaire un degré de remplissage de l'espace extérieur de remplissage (6a) de la chambre de mesure (6) qui est identique à celui de la somme des deux espaces de remplissage internes (6b.1, 6b.2).

4. Dispositif selon l'une des revendications 1 à 3, caractérisé en ce que le diamètre des alésages (3a, 3b) des canaux de liaison avec la chambre de mesure (6) est inférieur à la hauteur (h) de l'enveloppe (202) du piston annulaire (20).

5. Dispositif selon l'une des revendications 1 à 4, caractérisé en ce que les évidements (21a, b; 22a, b) sont symétriques par rapport à la paroi centrale (201) du piston et symétriques par rapport à l'ouverture (203) traversant le piston annulaire (20), et partent de cette ouverture.

6. Dispositif selon l'une des revendications 1 à 5, caractérisé en ce que chacun des évidements (21 a, b; 22a, b) de l'espace annulaire supérieur et de l'espace annulaire inférieur ménagés dans l'enveloppe (202) du piston annulaire (20) est découpé jusqu'à la paroi centrale (201) du piston.

7. Dispositif selon l'une des revendications 1 à 6, caractérisé en ce que les évidements (21a, b; 22a, b) de l'enveloppe du piston annulaire (20) présentent une forme rectangulaire lorsqu'on les observe en projection.

8. Dispositif selon l'une des revendications 1 à 7, caractérisé en ce que les ouvertures d'entrée (11, 12) des canaux de liaison (3a, b), ménagées sur la paroi cylindrique interne (601) de la chambre de mesure (6), sont disposées symétriquement par rapport au piston annulaire (20) disposé dans la chambre de mesure.

9. Dispositif selon l'une des revendications 1 à 8, caractérisé en ce que la surface projetée maximale d'arrivée de l'écoulement sur l'enveloppe (202) du piston annulaire (20) qui est associée à une ouverture d'entrée d'un canal de liaison est divisée en deux surfaces d'entrée d'écoulement identiques ou au moins sensiblement identiques, à savoir (fs) pour l'alimentation du piston annulaire depuis l'extérieur et (fp) pour l'alimentation du piston annulaire depuis l'intérieur, et la surface d'amenée d'écoulement (fp) pour l'alimentation du piston annulaire par l'intérieur, est formée par les évidements (21a, 22a ou 21b, 22b) qui se raccordent respectivement du côté supérieur et du côté inférieur de l'enveloppe du piston annulaire sur un côté de la cloison, et la surface extérieure (fs) pour l'entrée de l'écoulement pour l'alimentation du piston annulaire depuis l'extérieur est formée par l'enveloppe et par la partie résiduelle de la surface d'enveloppe du piston annulaire qui reste dans la paroi centrale du piston dans la région des évidements.

10. Dispositif selon l'une des revendications 1 à 9, caractérisé en ce que les pistons annulaires présentent un tourillon de guidage (24) s'étendant suivant l'axe longitudinal (W) du piston dans l'espace annulaire supérieur doté d'un alésage aveugle (26) partant de l'espace annulaire inférieur (27a), et l'aimant (22) servant à générer les valeurs de mesure est placé dans le trou aveugle (26) et y est fixé de manière étanche au moyen d'un bouchon fileté (25).

11. Dispositif selon l'une des revendications 1 à 10, caractérisé en ce que le boîtier est constitué de trois parties, à savoir une partie cylindrique centrale (2) présentant les canaux de liaison, avec une chambre cylindrique de mesure (6), ainsi qu'une partie de fond (8) et un couvercle (5), et des garnitures d'étanchéité sont placées entre la partie centrale et la partie de fond ou le couvercle, et les parties du boîtier sont reliées l'une à l'autre de manière fixe et étanche, au moyen de vis.

12. Dispositif selon la revendication 11, caractérisé en ce que la partie de couvercle (5) et la partie de fond (8) présentent chacune un gradin central de guidage (502, 84), lesquels gradins peuvent s'insérer en ajustement exact dans la chambre cylindrique de mesure (6) de la partie centrale (2), et du côté intérieur, le couvercle présente, coaxialement par rapport à l'axe longitudinal (M), un gradin annulaire (503) doté d'un tourillon de guidage (504) disposé centralement à l'intérieur, et entre l'épaulement annulaire (503) et le tourillon de guidage (504), il reste un espace annulaire périphérique (507) pour l'engagement d'un tourillon de guidage (24) du piston annulaire (20), et la partie de fond (8) présente au centre et coaxialement par rapport à l'axe longitudinal (M) du cylindre un culot cylindrique de guidage (80) dont le diamètre extérieur correspond au diamètre extérieur de l'épaulement annulaire (503) du couvercle (5) et qui est doté d'une surface frontale annulaire (81) correspondant à la surface frontale annulaire de l'épaulement annulaire (503) du couvercle, qui sert de surface de pose pour le piston annulaire, de sorte que le piston annulaire est guidé par sa paroi centrale de piston entre la surface annulaire (503a) du couvercle (5) et la surface frontale de pose (81) du culot de guidage (80) de la pièce de fond (8).

13. Dispositif selon l'une des revendications 1 à 12, caractérisé en ce qu'au moins un alésage aveugle (505) accessible de l'extérieur est formé dans la partie centrale du couvercle (5), et dans chacun de ces alésages aveugles peut être inséré un capteur magnétique à l'aide duquel l'aimant (22) disposé dans le piston annulaire (20) génère comme valeur de mesure une impulsion par tour du tourillon de guidage (24) du piston annulaire (20) autour du tourillon de guidage (504) de la chambre de mesure formé dans le couvercle (5), laquelle valeur de mesure peut être transférée à une unité de comptage et d'évaluation.

14. Dispositif selon la revendication 11, caractérisé en ce que du côté extérieur de la partie cylindrique centrale (2) du boîtier, dans la région qui entoure les ouvertures de sortie (13, 14) des alésages (3a, 3b), une surface de raccordement plane (212) est formée sur toute la hauteur de la partie centrale.
